# EUROPEAN PATENT SPECIFICATION

(11) **EP 1 225 571 B1**
(45) Date of publication and mention of the grant of the patent: **31.03.2004**
(21) Application number: 02000243.2
(22) Date of filing: 14.01.2002
(51) Int. Cl.: G11B 7/004, G11B 7/00

(54) **Pre-pit detecting apparatus**
Gerät zur Detektion von Vorsatzlöchern
Appareil de détection des creux d'en-tête

(30) Priority: 15.01.2001 JP 2001006566
(43) Date of publication of application: 24.07.2002
(73) Proprietor: Pioneer Corporation, Tokyo-to (JP)
(72) Inventor: Tanaka, Junji, Tokorozawa-shi, Saitama-ken (JP)
(74) Representative: Klingseisen, Franz, Dipl.-Ing.

(56) References cited:
- EP-A- 0 623 921
- US-A- 5 339 302
- US-A- 5 684 783
- PATENT ABSTRACTS OF JAPAN vol. 2000, no. 10, 17 November 2000 (2000-11-17) & JP 2000 195058 A (PIONEER ELECTRONIC CORP), 14 July 2000 (2000-07-14)
- PATENT ABSTRACTS OF JAPAN vol. 2000, no. 08, 6 October 2000 (2000-10-06) & JP 2000 132835 A (PIONEER ELECTRONIC CORP), 12 May 2000 (2000-05-12)

## Description

### BACKGROUND OF THE INVENTION

The present invention relates to the technical field of pre-pit detection apparatus for detecting pre-pits as pre-information formed on a high-density recording medium such as a DVD-R (DVD-Recordable) or DVD-RW (DVD-Rerecordable).

In general, address information and reference signals for generating clock signals for use in recording and reproducing operations are pre-recorded on a recordable type optical recording medium in the form of pre-pits and pre-grooves. For example, on a DVD-R (Digital Versatile Disc-Recordable), pre-grooves as regions for recording information such as video and audio data intended to be recorded as recording pits are formed, while pre-pits (hereinafter called land pre-pits or LPP) are recorded on land portions each of which is formed between the pre-grooves.

In the operation of a pre-pit detecting device, reflected light of a light beam irradiated to a pre-groove is received at a light-receiving portion, which is divided into two parts by a division line at least optically parallel with a tangential direction of the pre-groove. As a result, first and second read signals are generated on the basis of the outputs of electrical signals from the light receiving portion, and the difference therebetween is computed to generate a difference signal (hereinafter called a "radial push-pull signal"). Then the radial push-pull signal is compared with a threshold by means of an LPP-signal binarizing circuit to obtain a signal detected as a binary signal (hereinafter called an LPP signal).

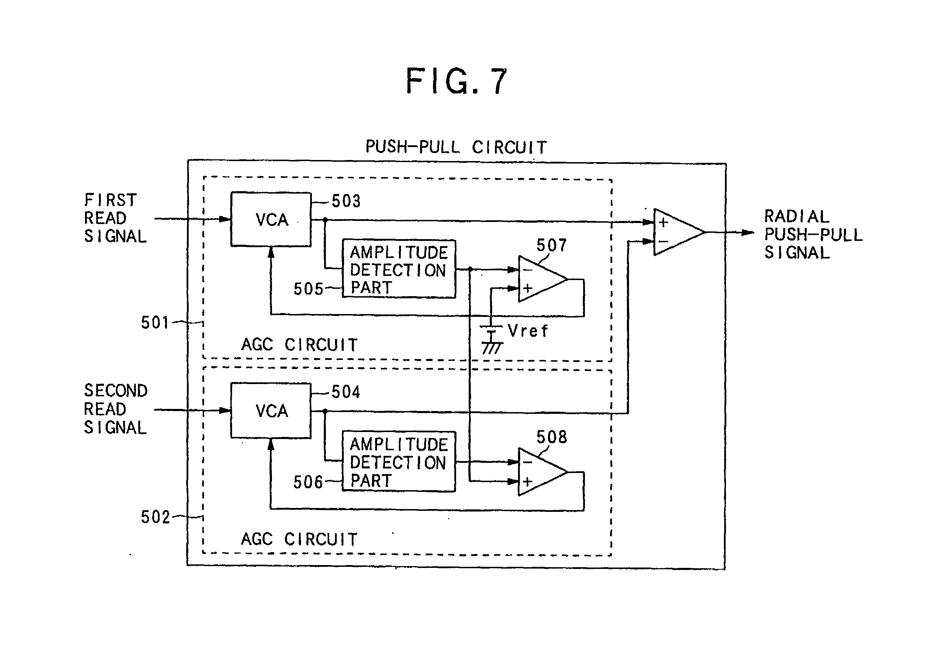

The radial push-pull signal is generated at a push-pull circuit in the pre-pit detecting device. FIG. 7 shows an internal configuration of the push-pull circuit in a conventional pre-pit detecting device. As shown, the push-pull circuit includes two AGC (Auto Gain Control) circuits 501, 502. The AGC circuit 501 is composed of a voltage control amplifier (VCA) 503, an amplitude detection part 505 and a subtracter 507, and has the function of making the amplitude of a signal, obtained from the first read signal, coincident with a reference voltage (ref). To be more specific, the voltage control amplifier 503 amplifies the first read signal at an amplification factor based on the difference between the amplitude of the first read signal generated at the subtracter 507 and the reference voltage so that the amplitude of the first read signal will be made coincident with the reference voltage (ref).

On the other hand, the AGC circuit 502 is composed of a voltage control amplifier (VCA) 504, an amplitude detection part 506 and a subtracter 508, and has the function for making the amplitude of a signal, obtained from the second read signal, coincident with the amplitude obtained from the first read signal. To be more specific, the voltage control amplifier 504 amplifies the second read signal at an amplification factor based on the difference between the amplitude of the second read signal generated at the subtracter 508 and the amplitude of the first read signal so that the amplitude of the second read signal will be made coincident with that of the first read signal.

Thus both amplitudes of the first and second read signals can be made coincident with each other, which makes it possible to eliminate RF and noise components securely, and hence to generate a proper radial push-pull signal which contains only the LPP component.

The difference of the amplitude of the first read signal and the amplitude of the second read signal, however, may become large on a high-density recording medium such as a DVD-R. In this case, if the difference exceeds the operational range of the voltage control amplifiers, the conventional push-pull circuit cannot make the amplitudes of the first and second read signals coincident with each other, which makes it difficult to generate a proper radial push-pull signal. Radial push pull circuits including means to correct for the signal level difference of the two read signals are known from the documents EP-A-0 623 921 and US-A-5 339 302.

Therefore, a voltage control amplifier having a required operational range needs to be selected in consideration of the difference for the conventional push-pull circuit. However, since the operational range varies between voltage control amplifiers, this selection requires time and effort very much.

### SUMMARY OF THE INVNETION

The present invention has been made in view of the above-mentioned problems, and it is an object thereof to provide a pre-pit detecting device capable of generating a proper radial push-pull signal even when the difference between the amplitudes of the first and second read signals exceeds the operational range of the voltage control amplifiers.

The above object of the present invention can be achieved by a pre-pit detecting apparatus of the present invention for an optical recording medium, which has information tracks for recording record information and guide tracks for guiding a light beam to the information tracks, and further has pre-pits carrying pre-information formed on the guide tracks. The pre-pit detecting device includes a push-pull circuit, which when the optical beam is irradiated to one of the information tracks, computes the difference between a first read signal and a second read signal generated on the basis of outputs of electrical signals from a light receiving unit, divided into two parts by a division line at least optically parallel with the information track, to generate a difference signal, such that the pre-pit detecting device detects a pre-pit on the basis of the difference signal output from the push-pull circuit. The push-pull circuit is provided with an amplitude correcting device which computes the difference between the maximum amplitude of the first read signal and the maximum amplitude of the second read signal to bring both amplitudes close to each other and consequently make them coincide, such that said push-pull circuit performs a computation on the difference between the first and second read signals whose amplitudes have been made to coincide by said amplitude correcting device.

According to the present invention, a light beam is irradiated to an information track of an optical recording medium on which a pre-pit carrying pre-information is formed. Then reflected light of the light beam is received at a light receiving portion, which is divided into two parts by a division line at least optically parallel with the information track, to generate first and second read signals on the basis of the outputs of electrical signals from the light receiving portion. The first and second read signals are input to a push-pull circuit. The push-pull circuit computes the difference between the amplitude of the first read signal and the amplitude of the second read signal to bring both amplitudes close to each other on the basis of the difference so as to make them coincident with each other (corrected). Then the difference of the first and second read signals whose amplitudes coincide with each other is computed to generate a difference signal. Thus the pre-pit is detected on the basis of the difference signal.

Therefore, even if the difference between the amplitudes of the first and second read signals exceeds the operational range of the voltage control amplifiers, both amplitudes can be easily made coincident with each other, which makes it possible to generate a proper difference signal with few noise components.

In one aspect of the present invention, said push-pull circuit further comprises a device for removing a direct-current component from the amplitude of the first read signal and a device for removing the direct-current component from the amplitude of the second read signal, wherein said amplitude correcting device computes the difference between the amplitudes of the first and second read signals, from which the direct-current component has been removed, to bring both amplitudes close to each other and consequently make them coincide.

According to this aspect, the amplitude correcting device makes a correction after a direct-current component is removed from the amplitude of the first read signal and the amplitude of the second read signal, so that both amplitudes can be made to coincide more accurately, thereby generating a proper difference signal with fewer noise components.

### BRIEF DESCRIPTION OF THE DRAWINGS

FIG. 1 is a cross-sectional perspective view of a DVD-R 50 according to an embodiment of the present invention;
FIG. 2 is a schematic diagram showing a record format of pre-information and rotation control information pre-recorded on the DVD-R 50;
FIG. 3 is a block diagram showing the general structure of a pre-pit detecting device according to the embodiment;
FIG. 4A is a diagram showing an internal configuration of a push-pull circuit;
FIG. 4B shows exemplary waveforms of a first read signal Srf1, a second read signal Srf2, a first correction signal Srfc1, and a second correction signal Srfc2 in the push-pull circuit shown in FIG. 4A;
FIG. 5 is a diagram showing an internal configuration of a signal binarizing circuit 2;
FIG. 6A is a diagram showing an internal configuration of a push-pull circuit according to another embodiment of the present invention;
FIG. 6B shows exemplary waveforms of a first read signal Srf1, a second read signal Srf2, a first correction signal Srfc1, and a second correction signal Srfc2 in the push-pull circuit shown in FIG. 6A; and
FIG. 7 is a diagram showing an internal configuration of a push-pull circuit in a conventional pre-pit detecting device.

### DESCRIPTION OF THE PREFERRED EMBODIMENTS

The following section will describe preferred embodiments of the present invention with reference to the accompanying drawings. It should be noted that the embodiments to be described below assume a pre-pit detecting device for detecting pre-pits from a DVD-R as a recording medium on which address information indicative of an information recording position on the recording medium and reference signals for generating clock signals for use in recording and reproducing operations are formed as LPPs.

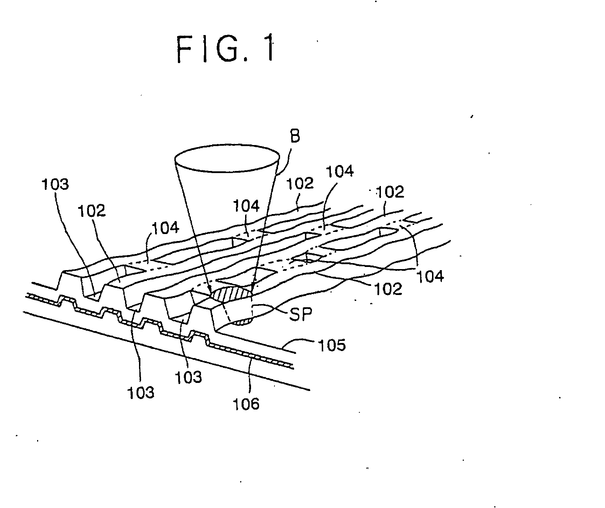

Referring first to FIG. 1, description will be made about the physical structure of the DVD-R according to an embodiment of the present invention. FIG. 1 is a cross-sectional perspective view of the DVD-R 50 according to the embodiment of the present invention. As shown in FIG. 1, the DVD-R 50 is a pigment type DVD-R which is provided with a pigment film 105 capable of writing information once. Pre-grooves 102 as information tracks on which record information is to be recorded, and lands 103 as guide tracks for guiding a light beam B like a laser beam as reproducing and recording light to the pre-grooves 102 are formed on the DVD-R 50. The DVD-R 50 is also provided with a protective film for protecting the pre-grooves and the lands, and a reflection surface 106 for reflecting the optical beam B at the time of reproduction of record information. Then LPPs 104 are formed on the lands 103.

In the DVD-R 50, the pre-grooves 102 are wobbled at a frequency used as a standard of reference to the rotation speed of the DVD-R 50. Upon recording on the DVD-R 50 record information (information such as image information intended to be recorded other than pre-information and sync signals), the wobbling frequency of the pre-grooves 102 is detected at an information recording apparatus to obtain a sync signal so that the DVD-R 50 will be controlled to rotate at a predetermined speed. At this time, the LPPs 104 are also detected to obtain pre-information beforehand so as to obtain address information and the like indicative of information recording positions on the DVD-R 50. Thus the record information is recorded at a corresponding recording position based on the address information.

In recording the record information, the light beam B is so irradiated that the center of the light beam B will coincide with the center of a corresponding pre-groove 102. As a result, a recording information pit corresponding to the record information is formed on the pre-groove 102 to form the record information. At,this time, the size of the light spot SP is so set that the light spot is irradiated not only to the pre-groove 102 but partially to the adjacent land 103 as well. Using reflected light of the light spot partially irradiated to the land 103, pre-information is detected from the LPP 104 by a push-pull method to obtain the pre-information. On the other hand, using reflected light of the light spot irradiated to the pre-groove 102, a wobble signal is detected from the pre-groove 102 to obtain a clock signal for rotation control.

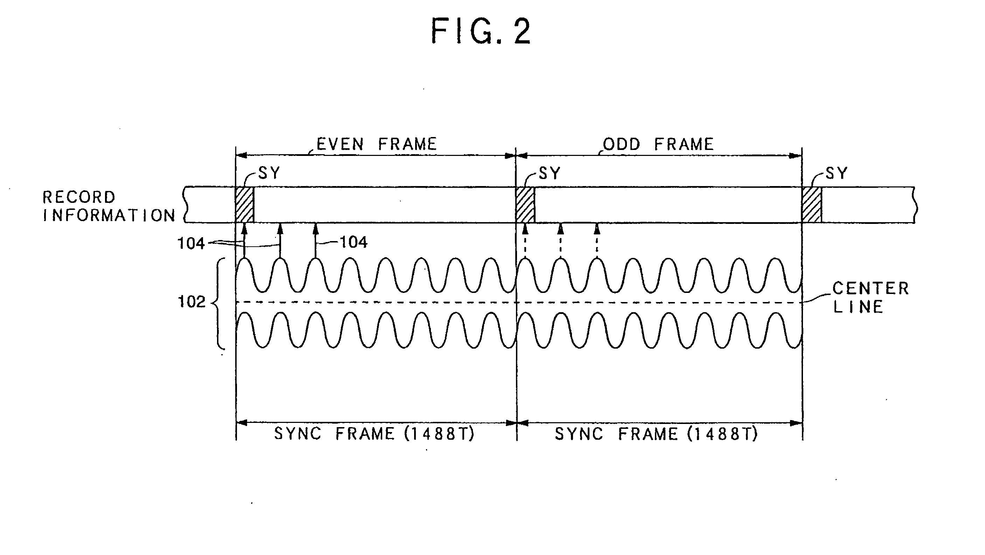

Referring next to FIG. 2, description will be made about a record format of the pre-information and rotation control information pre-recorded on the DVD-R 50. It should be noted that the term "pre-recorded" means "preformed" as a disk. FIG. 2 is a schematic diagram showing a record format of the pre-information and rotation control information pre-recorded on the DVD-R 50. In FIG. 2, the upper portion shows a record format of the record information, and corrugated waveforms of the lower portion show a wobbling state (a plan view) of the pre-grooves 102 for recording the record information. Further, upward arrows between the record information and the wobbling state of the pre-grooves 102 schematically show positions at which LPPs 104 are formed. It should be noted that in FIG. 2 the wobbling state of the pre-grooves 102 is shown with amplitude greater than actual amplitude for the sake of clarity. Further, the record information is recorded on the centerline of each corresponding pre-groove 102.

As shown in FIG. 2, the record information to be recorded on the DVD-R 50 is divided beforehand on a sync-frame basis. 26 sync frames form one recording sector as an information unit, and 16 recording sectors form one ECC block as an information block. It should be noted that one sync frame has a length 1488 times (1488T) longer than the unit length (hereinafter called T) corresponding to a bit interval defined by the record format for recording the above-mentioned record information. Further, sync information SY for synchronization on a sync-frame basis is recorded in the top 14 T portion of each sync frame.

On the other hand, the pre-information to be recorded on the DVD-R 50 is recorded on a sync-frame basis. In recording the pre-information using the LPPs 104, one LPP 104, as indicating a sync signal in the pre-information, is always formed on the land 103 adjacent to a region in which the sync information SY is recorded for each sync frame of the record information. Meanwhile, one or two LPPs 104 indicative of the contents of the pre-information to be recorded are formed on the land 103 adjacent to the first half of the sync frame containing information other than the sync information SY (or no LPP 104 may be formed with respect to the first half of the sync frame containing information other than the sync information SY, depending on the contents of the pre-information to be recorded). At this time, the LPPs 104 are formed in either even-numbered frames (hereinafter called the "EVEN frames") or odd-numbered frames (hereinafter called the "ODD frames") of each recording sector to record the pre-information. In other words, if the LPPs 104 are formed in the EVEN frames in FIG. 2 (as indicated with the solid upward arrows), no LPPs 104 will be formed in the ODD frames adjacent to the EVEN frames.

The relationship between the wobbling state of the pre-grooves 102 and the LPPs 104 is accounted for by the fact that the LPPs 104 are formed in positions where the amplitude of wobbling becomes the maximum.

On the other hand, the pre-grooves 102 are wobbled all over the sync frames on a constant wobbling frequency, f0 of 140 kHz (at which one sync frame corresponds to a part for eight waves of the fluctuating waveform of the pre-grooves 102). Then the constant wobbling frequency, f0 is detected by a pre-pit detecting device or the like to extract a sync signal for use in controlling the revolution of a spindle motor, not shown, for rotating the DVD-R 50.

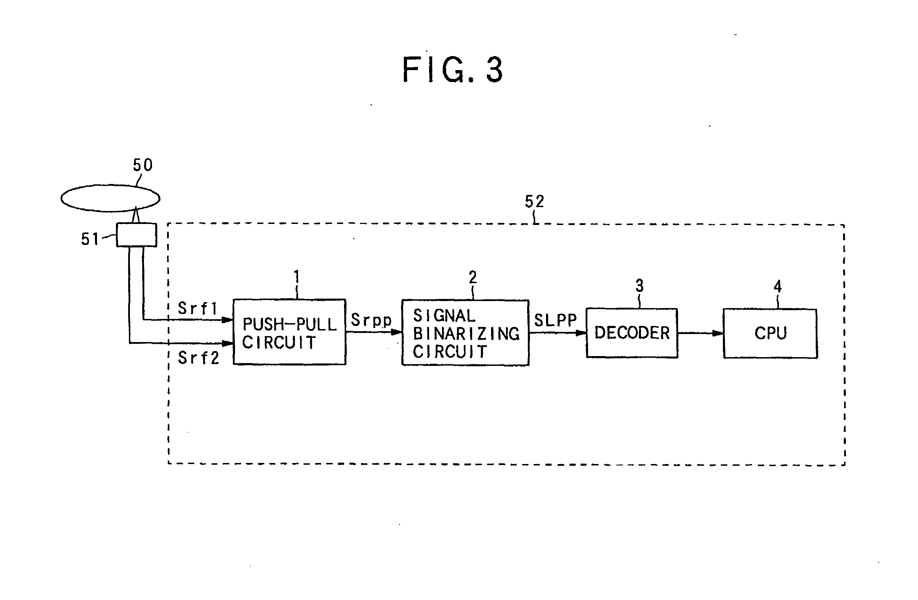

Referring next to FIGs. 3 through 6, description will be made about a pre-pit detecting device for detecting pre-pits from the above-mentioned DVD-R 50 according to the present invention. FIG. 3 is a block diagram showing the general structure of a pre-pit detecting device 52 as practiced in the embodiment. It should be noted that the pre-pit detecting device according to the present invention is applied to an information recording and reproducing apparatus for recording media in an actual situation, but description of the structure and operation of apparatus components other than the pre-pit detecting device 52 will be omitted in the embodiment.

As shown in FIG. 3, the pre-pit detecting device 52 includes a push-pull circuit 1, a signal binarizing circuit 2, a decoder 3 and a CPU 4. In operation, a first read signal Srf1 and a second read signal Srf2 are input from a pickup 51 to the push-pull circuit 1 of the pre-pit detecting device 52. The first read signal Srf1 and the second read signal Srf2 are generated as follows. First, a light beam is irradiated from the pickup 51. Then reflected light from the information recording surface of the DVD-R 50 driven to rotate is received at a light receiving portion, not shown, which is divided into two parts by a division line at least optically parallel with the tangential direction of the pre-grooves 102 on the DVD-R 50. The light receiving portion outputs electrical signals according to the amounts of reflected light received at the light receiving portion, so that the first and second read signals are generated on the basis of the electrical signals.

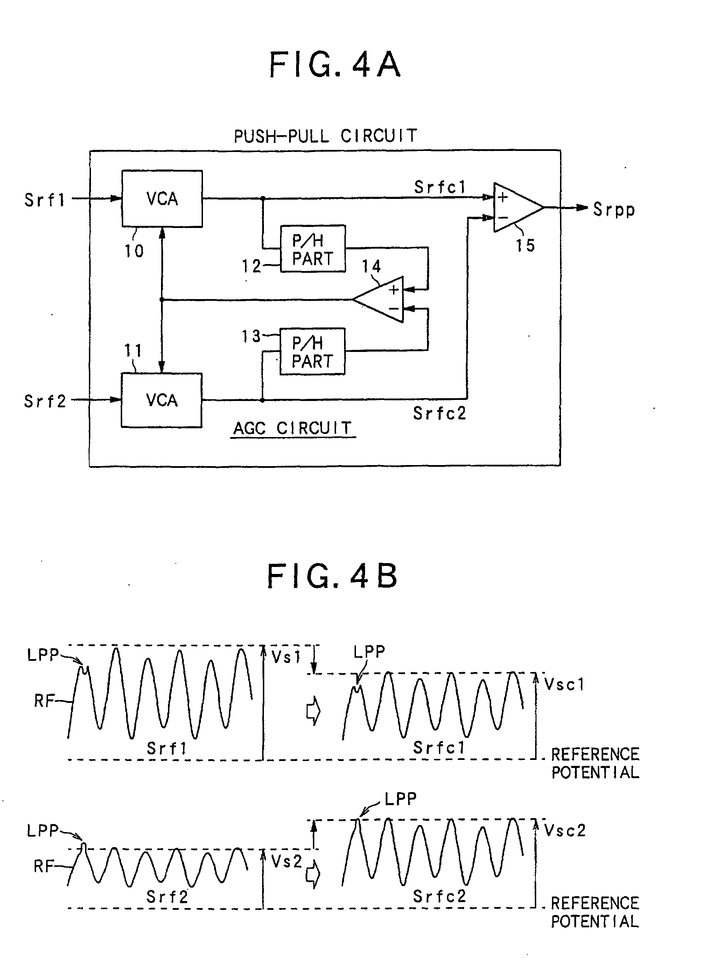

FIG. 4A is a diagram showing an internal configuration of the push-pull circuit 1 as characterized by the present invention. As shown in FIG. 4A, the push-pull circuit 1 includes a voltage control amplifiers (VCA) 10 and 11, peak hold (P/H) parts 12 and 13, and subtracters 14 and 15.

Of all the elements, the voltage control amplifiers (VCA) 10 and 11, the peak hold (P/H) parts 12 and 13, and the subtracter 14 constitute an AGC circuit. The AGC circuit functions as amplitude correcting device which computes the difference between the amplitude of the first read signal Srf1 and the amplitude of the second read signal Srf2 to bring both amplitudes close to each other on the basis of the difference therebetween, and consequently make them coincide.

To be more specific, the subtracter 14 computes the difference between the maximum amplitude of the first read signal Srf1 held by the peak hold (P/H) part 12 and the maximum amplitude of the second read signal Srf2 held by the peak hold (P/H) part 13 to output a signal indicative of the difference to the voltage control amplifiers (VCA) 10 and 11, respectively. The difference signal is input into input terminals, mutually opposite in polarity, of the voltage control amplifier (VCA) 10 and the voltage control amplifier (VCA) 11.

Then the voltage control amplifier (VCA) 10 makes such a correction that the amplitude of the first read signal Srf1 is amplified at an amplification factor based on the difference signal to bring it close to the amplitude of the second read signal Srf2, thus generating a first correction signal Srfc1. On the other hand, the voltage control amplifier (VCA) 11 makes such a correction that the amplitude of the second read signal Srf2 is amplified at an amplification factor based on the difference signal to bring it close to the amplitude of the first read signal Srf1, thus generating a second correction signal Srfc2. In other words, since the difference signal is input into the input terminals, mutually opposite in polarity, of the voltage control amplifier (VCA) 10 and the voltage control amplifier (VCA) 11, the voltage control amplifier (VCA) 10 and the voltage control amplifier (VCA) 11 are reversely controlled. As a result, the amplitude of the first correction signal Srfc1 and the amplitude of the second correction signal Srfc2 are brought close to each other, and consequently made to coincide.

FIG. 4B shows exemplary waveforms of the first read signal Srf1, the second read signal Srf2, the first correction signal Srfc1 and the second correction signal Srfc2 in the above-mentioned operation. It should be noted that FIG. 4B shows waveforms of the signals generated when recording pits carrying record information have already been formed, that is, in the case of the recorded DVD-R 50.

In the example of FIG. 4B, the maximum amplitude (Vs1) of the first read signal Srf1 is greater than the maximum amplitude (Vs2) of the second read signal Srf2. However, the amplitude correcting device reduces the amplitude level of the first read signal Srf1 to generate the first correction signal Srfc1, while it raises the amplitude level of the second read signal Srf2 to generate the second correction signal Srfc2. As a result, the maximum amplitude voltage (Vsc1) of the first correction signal Srfc1 and the maximum amplitude voltage (Vsc2) of the second correction signal Srfc2 are made to coincide.

In the embodiment, the push-pull circuit 1 does not make the amplitude of one signal (for example, of the second read signal Srf2) coincident with the amplitude of the other signal (for example, of the first read signal Srf1), but does bring both amplitudes close to each other and consequently make them coincide. This makes it possible to virtually realize a two-fold increase in the operational range of the voltage control amplifiers (VCA).

Suppose that no recording pits carrying record information have not been formed yet in the pre-grooves 102 of the DVD-R 50, that is, information has not been recorded on the DVD-R 50 yet. In this case, a signal generated by superimposing an LPP on a wobbling frequency component containing no RF component as shown in FIG. 4B can be used to make the amplitudes of the first and second read signals Srf1 and Sfr2 coincide in the same manner as in the case of the recorded DVD-R 50.

Then the subtracter 15 computes the difference between the correction signals Srfc1 and Srfc2 to generate a radial push-pull signal Srpp to be output to the signal binarizing circuit 2. The radial push-pull signal Srpp is a composite signal generated by superimposing an LPP signal component on the wobbling frequency component (hereinafter called the "wobble signal component).

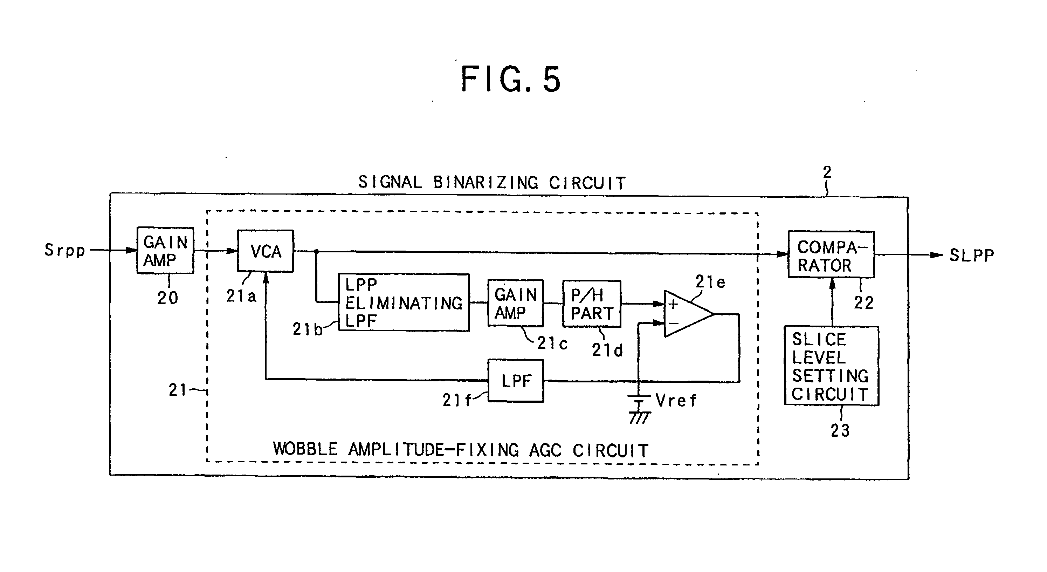

The amplitude of the LPP signal component may fluctuate because of certain factors such as disk quality. Since the LPP signal component is compared with a predetermined slice level so that its existence will be sensed (binarized), fluctuations in amplitude of the LPP signal component may cause such an incorrect sensing result that the LPP signal component does not exist in spite of existing in fact. In this case, it is possible to perform gain adjustment so that the amplitude of the LPP signal component will be kept substantially constant. As one method of gain adjustment, it is possible to peak-hold the radial push-pull signal so that the peak values will be kept substantially constant (for example, this method is carried out in the signal binarizing circuit). In other words, since the radial push-pull signal is generated by superimposing the LPP signal component on the wobble signal component, peak-holding the radial push-pull signal results in peak-holding the LPP signal component. Therefore, gain adjustment of the peak values makes it possible to get the amplitude of the LPP signal component fixed. However, this embodiment employs such a signal binarizing circuit (FIG. 5) as to reduce the occurrence of malfunctions due to noise components compared to the above-mentioned method.

FIG. 5 is a diagram showing an internal configuration of the signal binarizing circuit 2. As shown in FIG. 5, the signal binarizing circuit 2 includes a gain amplifier 20, a wobble amplitude-fixing AGC circuit 21, a comparator 22 and a slice level setting circuit 23.

In the signal binarizing circuit 2, the radial push-pull signal Srpp is input to the wobble amplitude-fixing AGC circuit 21 through the gain amplifier 20. The wobble amplitude-fixing AGC circuit 21 is equipped with a VCA 21a, an LPP eliminating LPF 21b, a gain amplifier 21c, a peak hold 21d, a subtracter 21e and an LPF 21f.

The LPP eliminating LPF 21b eliminates the LPP signal component contained in the radial push-pull signal Srpp input to the wobble amplitude-fixing AGC circuit 21 to extract a wobble signal component. The gain amplifier 21c amplifies the extracted wobble signal component, and the peak hold part 21d holds the maximum amplitude of the wobble signal component. Then the subtracter 21e computes the difference between the maximum amplitude of the wobble signal component and a reference voltage (Vref) to supply the same to the VCA 21a through the LPF 21f. The LPF 21f is to control the response speed of the AGC circuit 21. The VCA 21a amplifies the radial push-pull signal Srpp at an amplification factor based on the supplied difference so that the radial push-pull signal Srpp will be made coincident with the reference voltage (Vref). Thus the amplitude of the radial push-pull signal Srpp can be kept constant.

In other words, since the amplitude of the wobble signal component of the DVD-R 50 and the amplitude of the LPP signal component are both designed to fall within respectively predetermined limits, keeping the amplitude of the wobble signal component substantially constant allows the amplitude of the LPP signal component to be kept substantially constant. Since this relationship is realized in any other recording media, the signal binarizing circuit 2 is applicable to any other recording media. Further, the above-mentioned signal binarizing circuit that carries out the peak hold of the radial push-pull signal performs gain adjustment on the basis of the LPP signal component. In this case, since the appearance cycle of the LPP is long, and the number of appearances is small and changeable, if disturbance such as noise occurs, it will take time to return to a proper adjustment state. In contrast, since the signal binarizing circuit 2 performs gain adjustment on the basis of the wobble signal component that appears in a fixed cycle shorter than the LPP signal component, a return to a proper adjustment state can be realized quickly even if disturbance occurs.

Then the comparator 22 compares the radial push-pull signal Srpp, the amplitude of which has gotten fixed, with a slice level supplied from the slice level setting circuit 23 to extract an LPP signal Slpp to be output to the decoder 3 shown in FIG. 3.

The decoder 3 decodes the LPP signal Slpp to cause address information indicative of information recording positions and various timing signals to be output to the CPU 4. Thus the CPU 4 performs control necessary to record information on the DVD-R 50 on the basis of the address information and the timing signals.

As discussed above and according to the embodiment, the amplitudes of the first and second read signals Srf1 and Srf2, both of which have been input to the push-pull circuit 1, are brought close to each other and consequently made to coincide, which virtually realizes a two-fold increase in the operational range of the voltage control amplifiers (VCA). Therefore, even if the difference between the amplitudes of the first and second read signals Srf1 and Srf2 exceeds the operational range of the voltage control amplifiers (VCA), both amplitudes can be easily made to coincide, thereby generating a proper radial push-pull signal Srpp with few noise components.

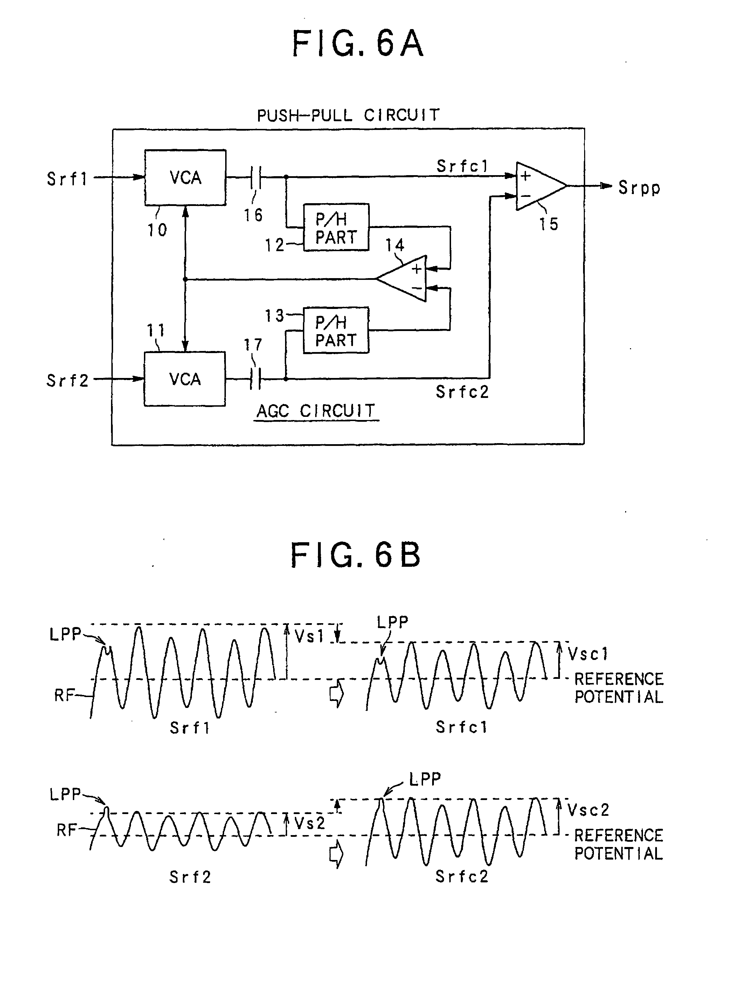

FIG. 6A shows a push-pull circuit as practiced in another embodiment different from that shown in FIG. 4A. The push-pull circuit 1a shown in FIG. 6A differs from that shown in FIG. 4A in that a capacitor 16 is inserted in a signal path between the voltage control amplifier (VCA) 10 and the peak hold (P/H) part 12, and a capacitor 17 is inserted in a signal path between the voltage control amplifier (VCA) 11 and the peak hold (P/H) part 13, respectively. The capacitor 16 functions as a device for removing a direct-current (DC) component from the first read signal Srf1, while the capacitor 17 functions as a device for removing the direct-current (DC) component from the second read signal Srf2.

In other words, the capacitors 16, 17 are inserted in the push-pull circuit 1a shown in FIG. 6(A), so that the direct-current (DC) component is removed from the first read signal Srf1 and the second read signal Srf2, thereby causing signals containing only the alternating current (AC) component of the RF component. After that, the difference between these signals is computed so that the amplitudes of the first and second read signals Srf1 and Srf2 will be brought close to each other on the basis of the computation results, thereby making both amplitudes coincide. Such a configuration makes it possible to compute the difference to be output to the voltage control amplifiers from only the amplitude of the pure RF component. Therefore, the push-pull circuit 1a can make the amplitude of the first read signal Srf1 coincident with the amplitude of the second read signal Srf2 more accurately than the push-pull circuit 1 shown in FIG. 4A, thereby generating a proper radial push-pull signal Srpp with fewer noise components.

However, in the case of the non-recorded DVD-R 50, since the direct-current component is removed from the composite signal generated by superimposing the LPP on the wobble signal component containing no RF component, the amplitude becomes very small. In such a case, since the push-pull circuit 1 is designed to compute the difference using the amplitude containing the direct-current component, the amplitude becomes greater and the accuracy is more improved in the push-pull circuit 1 shown in FIG. 4A.

The present invention is aimed at making the amplitudes of the first and second read signals Srf1 Srf2 coincide even when the difference between both amplitudes is too large to exceed the operational range of the voltage control amplifiers. However, in the case of the non-recorded DVD-R 50, the difference in amplitude is inherently small, which has no adverse effect on detection of the LPP.

In the above-embodiments, the DVD-R was taken by way of example to describe the present invention, but the present invention is not limited thereto, and it is applicable to any other recording media such as a DVD-RW.

As described above and according to the present invention, the amplitude of the first read signal and the amplitude of the second read signal are brought close to each other on the basis of the difference between the amplitudes of the first and second read signals, both of which have been input to the push-pull circuit, thereby making both amplitude coincide. In such a configuration, even if the difference between the amplitudes of the first and second read signals exceeds the operational range of the voltage control amplifiers, both amplitudes can be easily made to coincide, which makes it possible to generate a proper radial push-pull signal with few noise components.

The invention may be embodied in other specific forms without departing from the essential characteristics thereof as defined in the claims. The present embodiments are therefore to be considered in all respects as illustrative and not restrictive, the scope of the invention being indicated by the appended claims rather than by the foregoing description and all changes which come within the meaning of the claims are therefore intended to be embraced therein.

## Claims

1. A pre-pit detecting apparatus (52) for an optical recording medium (50), which has information tracks (102) for recording record information and guide tracks (103) for guiding a light beam (B) to the information tracks, and further has pre-pits carrying pre-information formed on the guide tracks, the pre-pit detecting device including a push-pull circuit (1), which when the optical beam is irradiated to one of the information tracks, computes the difference between a first read signal (Srf1) and a second read signal (Srf2) generated on the basis of outputs of electrical signals from a light receiving unit, divided into two parts by a division line at least optically parallel with the information track, to generate a difference signal, such that the pre-pit detecting device detects a pre-pit on the basis of the difference signal output from the push-pull circuit, **characterized in that** said push-pull circuit comprises
an amplitude correcting device which computes the difference between the maximum amplitude of the first read signal and the maximum amplitude of the second read signal to bring both amplitudes close to each other and consequently make them coincide, such that said push-pull circuit performs a computation on the difference between the first and second read signals whose amplitudes have been made to coincide by said amplitude correcting device.

2. The pre-pit detecting apparatus (52) according to claim 1, wherein said push-pull circuit (1) further comprises a device for removing a direct-current component from the amplitude of the first read signal and a device for removing the direct-current component from the amplitude of the second read signal, wherein
said amplitude correcting device computes the difference between the maximum amplitudes of the first and second read signals, from which the direct-current component has been removed, to bring both amplitudes close to each other and consequently make them coincide.

## Patentansprüche

1. Vorsatzloch-Erfassungsvorrichtung (52) für ein optisches Aufzeichnungsmedium (50), welches Informationsspuren (102) zum Aufzeichnen von Aufzeichnungs-Information und Führungsspuren (103) zum Führen eines Lichtstrahls (B) zu den Informationsspuren aufweist, und welches des weiteren Vorsatzlöcher aufweist, die Vorsatz-Information trägt, die auf den Führungsspuren ausgebildet sind, wobei die Vorsatzloch-Erfassungseinrichtung einen Gegentaktschaltkreis (1) enthält, welcher, wenn der optische Strahl zu einer der Informationsspuren gestrahlt wird, die Differenz zwischen einem ersten Lesesignal (Srf1) und einem zweiten Lesesignal (Srf2) berechnet, welche auf der Grundlage von Ausgangsgrössen von elektrischen Signalen aus einer Lichtempfangseinheit erzeugt werden, die in zwei Teile durch eine Teilungslinie zumindest optisch parallel zu der Informationsspur geteilt ist, um ein Differenzsignal zu erzeugen, so dass die Vorsatzloch-Erfassungseinrichtung ein Vorsatzloch auf der Grundlage des Differenzsignals erfasst, welches aus dem Gegentaktschaltkreis ausgegeben wird, **dadurch gekennzeichnet, dass** der Gegentaktschaltkreis
eine Amplituden-Korrektureinrichtung umfaßt, welche die Differenz zwischen der maximalen Amplitude des ersten Lesesignals und der maximalen Amplitude des zweiten Lesesignals berechnet, um die beiden Amplituden nahe beieinander und diese folglich in Übereinstimmung zu bringen, derart, dass der Gegentaktschaltkreis eine Berechnung auf der Differenz zwischen den ersten und zweiten Lesesignalen ausführt, deren Amplitude durch die Amplituden-Korrektureinrichtung zur Übereinstimmung gebracht wurden.

2. Vorsatzloch-Erfassungsvorrichtung (52) gemäß Anspruch 1, wobei der Gegentaktschaltkreis (1) des weiteren eine Einrichtung zur Entfernung einer Direktstromkomponente aus der Amplitude des ersten Lesesignals und eine Einrichtung zur Entfernung der Direktstromkomponente aus der Amplitude des zweiten Lesesignals umfasst, wobei
die Amplituden-Korrektureinrichtung die Differenz zwischen den maximalen Amplituden des ersten und des zweiten Lesesignals, aus welcher die Direktstromkomponente entfernt wurde, berechnet, um beide Amplituden nahe beieinander und folglich in Übereinstimmung zu bringen.

## Revendications

1. Appareil de détection de pré-creux (52) pour un support d'enregistrement optique (50), qui comporte des pistes d'informations (102) pour enregistrer des informations d'enregistrement et des pistes de guidage (103) pour guider un faisceau lumineux (B) vers les pistes d'informations, et qui comporte en outre des pré-creux qui contiennent des pré-informations formés sur les pistes de guidage, le dispositif de détection de pré-creux comprenant un circuit push-pull (1), qui, lorsque le faisceau optique est rayonné vers une des pistes d'informations, calcule la différence entre un premier signal lu (Srf1) et un deuxième signal lu (Srf2) générés sur la base de sorties de signaux électriques provenant d'une unité de réception de lumière, divisé en deux parties par une ligne de division au moins optiquement parallèle à la piste d'informations, afin de générer un signal de différence, de telle sorte que le dispositif de détection de pré-creux détecte un pré-creux sur la base du signal de différence sorti du circuit push-pull, **caractérisé en ce que** ledit circuit push-pull comprend : un dispositif de correction d'amplitude qui calcule la différence entre l'amplitude maximum du premier signal lu et l'amplitude maximum du deuxième signal lu afin de rapprocher les deux amplitudes l'une de l'autre et, par conséquent, de les faire coïncider, de telle sorte que ledit circuit push-pull effectue un calcul sur la différence entre les premier et deuxième signaux lus dont les amplitudes ont été amenées à coïncider par ledit dispositif de correction d'amplitude.

2. Appareil de détection de pré-creux (52) selon la revendication 1, dans lequel ledit circuit push-pull (1) comprend, en outre, un dispositif pour retirer une composante de courant continu de l'amplitude du premier signal lu et un dispositif pour retirer la composante de courant continu de l'amplitude du deuxième signal lu, dans lequel :
ledit dispositif de correction d'amplitude calcule la différence entre les amplitudes maximums des premier et deuxième signaux lus, desquelles la composante de courant continu a été retirée, afin de rapprocher les deux amplitudes l'une de l'autre et, par conséquent, de les faire coïncider.
